**Europäisches Patentamt**

**European Patent Office**

**Office européen des brevets**

(11) Veröffentlichungsnummer: **0 428 240 A2**

# EUROPÄISCHE PATENTANMELDUNG

(21) Anmeldenummer: **90250280.6**

(51) Int. Cl.5: **F24F 11/00**

(22) Anmeldetag: **12.11.90**

(30) Priorität: **13.11.89 DE 3938026**

(43) Veröffentlichungstag der Anmeldung:
**22.05.91 Patentblatt 91/21**

(84) Benannte Vertragsstaaten:
**AT BE CH DE FR LI NL**

(71) Anmelder: **LUNOS Lüftung GmbH & Co
Ventilatoren KG
Wilhelmstrasse 31-34
W-1000 Berlin 20(DE)**

(72) Erfinder: **Klein, Helmut
Maulbeerallee 22
W-1000 Berlin 20(DE)**

(74) Vertreter: **Pfenning, Meinig & Partner
Kurfürstendamm 170
W-1000 Berlin 15(DE)**

(54) **Entlüftungsgerät, insbesondere für innenliegende Sanitärräume.**

(57) Es wird ein Entlüftungsgerät, insbesondere für innenliegende Sanitärräume vorgeschlagen, das einen in einem Gehäuse aufgenommenen Motor, eine Lüfterschnecke und eine Steuer-/Regeleinheit aufweist. Weiterhin ist in dem Gehäuse im oder in unmittelbarer Nähe des Luftstromes ein Feuchtigkeitssensor angeordnet, der mit der Steuer-/Regeleinheit verbunden ist, die den Ventilatormotor abhängig von dem Ausgangssignal des Feuchtigkeitssensors steuert.

Fig.1

# ENTLÜFTUNGSGERÄT, INSBESONDERE FÜR INNENLIEGENDE SANITÄRRÄUME

Die Erfindung betrifft ein Entlüftungsgerät, insbesondere für innen liegende Sanitärräume nach dem Oberbegriff des Hauptanspruchs.

In Sanitärräumen ist es bekannt, Lüftungsgeräte zu installieren, die bei Betreten der Räume in Funktion treten, beispielsweise abhängig von der Betätigung des Lichtschalters. Bei Ausschalten des Lichtschalters wird dann auch das Entlüftungsgerät ausgeschaltet. Bei einer bekannten anderen Steuerung eines Entlüftungsgerätes geht der Motor abhängig vom Lichtschalter in Betrieb und läuft nach Abschaltung für eine bestimmte vorgegebene Zeit nach. Bei allen diesen Steuerungen der Entlüftungsgeräte für innenliegende Sanitärräume wird die Raumluftfeuchtigkeit nicht mitberücksichtigt, so daß die Entstehung von Schimmelpilz und Bauschäden, die durch erhöhten Feuchtegehalt der Raumluft hervorgerufen werden, nicht mit Sicherheit vermieden werden.

Es sind weiterhin Zentralentlüftungsanlagen bekannt, die die Raumluft im 24-Stunden-Betrieb absaugen. Dadurch wird zwar der Feuchtegehalt der Raumluft herabgesetzt, allerdings entstehen hohe energetische Verluste, da die erwärmte Raumluft unangemessen abgesaugt wird.

Ausgehend vom Stand der Technik liegt der Erfindung die Aufgabe zugrunde, ein Entlüftungsgerät, insbesondere für innenliegende Sanitärräume zu schaffen, mit dem Schimmelpilz und Bauschäden, die durch erhöhten Feuchtegehalt der Raumluft hervorgerufen werden, ohne wesentliche Erhöhung der Energiekosten vermieden werden.

Diese Aufgabe wird erfindungsgemäß durch die kennzeichnenden Merkmale des Hauptanspruchs in Verbindung mit den Merkmalen des Oberbegriffs gelöst.

Dadurch, daß in oder am Entlüftungsgerät ein Feuchtigkeitssensor vorgesehen ist, der die Raumluftfeuchte abtastet und mit einer Steuer-/Regeleinheit verbunden ist, und daß der Motor des Entlüftungsgerätes abhängig von dem Ausgangssignal des Feuchtigkeitssensors gesteuert/geregelt wird, kann die Raumluftfeuchte auf einen vorgegebenen Wert, der durch die Behaglichkeitsbedingungen der Raumbenutzer bestimmt ist, gehalten werden. Die Entstehung von Schimmelpilz und Bauschäden durch zu hohen Feuchtegehalt wird vermieden.

Weiterhin treten geringere energetische Verluste, die durch Absaugen der erwärmten Raumluft, z.B. bei 24-Stunden-Betrieb mit Zentralentlüftungsanlagen entstehen, auf.

Die feuchteabhängige Drehzahlregelung bewirkt, daß der Lüftermotor größtenteils mit verminderter Leistung arbeitet und hierdurch der Betriebsgeräuschpegel gegenüber der vollen Ventilatorleistung deutlich herabgesetzt wird.

Durch die in den Unteransprüchen angegebenen Maßnahmen sind vorteilhafte Weiterbildungen und Verbesserungen möglich.

Durch den Betrieb des Entlüftungsgerätes mit einer ständigen Grunddrehzahl wird der im Lüftungsgerät installierte Feuchtigkeitssensor von einem begrenzten, aber ständig fließenden Abluft-Volumenstrom bestrichen, so daß die Reaktionszeit zwischen Auftreten der Luftfeuchtigkeit in einem Raum bis zum Ansprechen des Feuchtigkeitssensors entscheidend herabgesetzt wird.

Ein Ausführungsbeispiel der Erfindung ist in der Zeichnung dargestellt und wird in der nachfolgenden Beschreibung näher erläutert. Es zeigen:

Fig. 1 die schematische Darstellung eines Entlüftungsgerätes, und

Fig. 2 eine schaltungsgemäße Ausgestaltung der Regelungsautomatik gemäß der vorliegenden Erfindung.

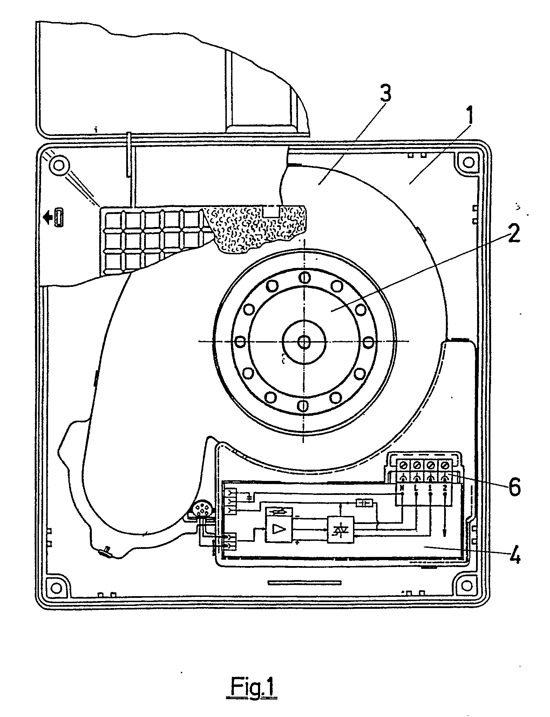

In Fig. 1 ist ein Entlüftungsgerät dargestellt, das ein Gehäuse 1, einen die Raumluft ansaugenden Ventilatormotor 2, eine Lüfterschnecke 3 und eine Regeleinheit 4 aufnimmt. Die Lüfterschnecke 3 geht in einen mit einer Rückschlagklappe abschließbaren Abluftkanal über. Das Gehäuse 1 ist an oder in der Wand oder Decke eines Sanitärraumes befestigt und wird zum Raum hin mit einem nicht dargestellten, mit modernem Design ausgestatteten Gitterrahmen oder dergleichen abgedeckt, der ein nach Aufklappen des Frontabdeckteils leicht auswechselbares Filter aufnimmt. In dem Einlauf des Ventilators bzw. in der Lüfterschnecke 3 ist ein Feuchtigkeitssensor 5 angeordnet, der mit einer Regelungsautomatik 4 verbunden ist.

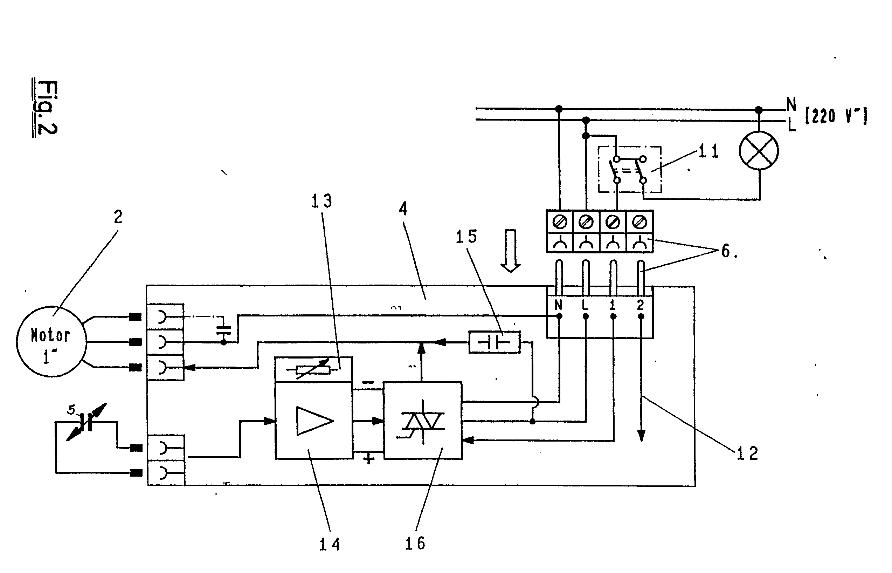

In Fig. 2 ist die Regelungsautomatik 4 in ihrer prinzipiellen schaltungsgemäßen Ausgestaltung dargestellt. Die Spannungszuführung erfolgt über Netzleitungen mit Schalter 11 und Steckverbindung 6. Der Feuchtigkeitssensor 5 ist an einen Verstärker 14 mit Regelteil 16 angeschlossen. Am Abgleichteil 13 können Führungsgrößen (Sollwerte für die Feuchtegrenzwerte des Sensors) eingestellt werden. Weiterhin ist eine Grundlast-Drehzahleinstellung 15 vorgesehen, der ebenso wie das Regelteil 16 mit dem Ventilatormotor 2 verbunden ist.

Die in einem unbenutzten Bad vorherrschende relative Feuchte von ca. 50 bis 60 % nimmt bei Gebrauch der Badewanne bzw. Brausetasse schlagartig zu. Wenn der Ventilatormotor 2, wie bei der Schaltung nach Fig. 2 mit einer Grunddrehzahl von beispielsweise 30 m³ Abluftvolumenstrom pro Stunde läuft, gelangt die feuchte Luft unverzüglich an den Sensor, der unterhalb der Decke im Einzellüfter installiert ist. In dem Verstärker 14 und Regelteil 16, das als Schwellenschalter ausgebildet ist, wird festgestellt, das das Ausgangssignal des Feuchtigkeitssensors 5 einen vorgegebenen Grenzwert überschritten hat und es wird ein Steuersignal für das Anlaufen des Antriebsmotors 2 bzw. das Erhöhen der Drehzahl abgegeben. Der Lüfter bleibt solange mit erhöhter Drehzahl in Betrieb, bis der Feuchtegehalt des Raumes den ursprünglichen Wert von 50 bis 60 % relative Feuchte wieder erreicht hat, d.h. bis ein unterer Grenzwert unterschritten ist.

Der Feuchtigkeitssensor 5 weist ein perforiertes Kunststoffgehäuse auf, in dem eine bedampfte Folie oder eine bedruckte keramische Schicht aufgenommen ist, die einen Plattenkondensator bildet, wobei die Folie oder die keramische Schicht selbst das Dielektrikum darstellen. Unter dem Einfluß der Luftfeuchtigkeit ändert sich die Dielektrizitätskonstante und damit die Kapazität des Kondensators. Die Kapazitätsänderungenwerden in ein entsprechendes elektrisches Signal umgewandelt, das der Regelungsautomatik 4 zugeführt wird.

Im beschriebenen Ausführungsbeispiel ist die Regelungsautomatik 4 derart ausgebildet, daß die Drehzahl des Ventilatormotors, z.B. ausgehend von der Grunddrehzahl, stufenlos in Funktion der Raumfeuchte geregelt wird. Die Motordrehzahlen können aber auch abhängig von der Raumfeuchte in Stufen von einer Steuereinheit gesteuert werden.

Das Entlüftungsgerät kann schaltungstechnisch so in den Installationskreis eingebunden werden, daß der Motor, abhängig von einem Schalter, der für die Raumbeleuchtung vorgesehen ist, auf einer fest vorgegebenen, höheren Drehzahl läuft, d.h. der Feuchtigkeitssensor 5 wird entsprechend einer Vorrangschaltung überbrückt, wobei der Ventilatormotor dann bei erhöhter Raumluftfeuchte entsprechend der Einschaltdauer der Raumbeleuchtung bzw. nach ihrem Ausschalten über ein Nachlaufzeit-Relais für eine vorgegebene Zeitspanne weiter läuft. Für solche Zusatzfunktionen steht z.B. ein weiterer beschaltbarer Kontakt 12 zur Verfügung.

Selbstverständlich können auch andere als in Fig. 2 dargestellte Schaltungen für die Regelungsautomatik verwendet werden. So kann zum Beispiel der Bauteileaufwand für die Steuer-/Regeleinheit durch Verwendung eines elektronisch kommutierten Gleichspannungsmotors als Antrieb für den Ventilator wesentlich reduziert werden.

Es kann zweckmäßig sein, die Lüftersteuerung durch Differenz-Feuchtefühler vorzunehmen, wobei ein Fühler außerhalb des Sanitärraumes angebracht ist.

Dadurch wird möglicherweise der Dauerlauf des Lüfters, zum Beispiel beim hohen Feuchtegehalt der Zustromluft, vermieden.

**Ansprüche**

1. Entlüftungsgerät, insbesondere für innenliegende Sanitärräume, mit einem Gehäuse, einem Motor, einer Lüfterschnecke und einer Steuereinheit, die im Gehäuse aufgenommen sind, wobei das Gehäuse an oder in der Wand oder Decke des Raumes befestigt ist und mit einem Abluftrohr verbunden ist,
**dadurch gekennzeichnet,**
daß in dem Gehäuse (1) im oder in unmittelbarer Nähe des Luftstroms ein Feuchtigkeitssensor (5) angeordnet ist, der mit einer Steuer-/Regeleinheit (4) verbunden ist und daß die Steuer-/Regeleinheit (4) den Motor (2) abhängig von dem die Feuchte erfassenden Ausgangssignal des Feuchtigkeitssensors (5) steuert/regelt.

2. Entlüftungsgerät nach Anspruch 1, dadurch gekennzeichnet, daß die Drehzahl des Motors (2) abhängig von einem oberen und einem unteren Grenzwert der Raumluftfeuchte gesteuert/geregelt wird.

3. Entlüftungsgerät nach Anspruch 1 oder 2, dadurch gekennzeichnet, daß die Drehzahl des Motors (2) kontinuierlich geregelt wird.

4. Entlüftungsgerät nach Anspruch 1 oder 2, dadurch gekennzeichnet, daß die Drehzahl des Motors in Stufen gesteuert wird.

5. Entlüftungsgerät nach einem der Ansprüche 1 bis 4, dadurch gekennzeichnet, daß die Steuer-/Regeleinheit (4) den Motor (2) ständig mit einer unteren Grenzdrehzahl (Grundlast) steuert.

6. Entlüftungsgerät nach einem der Ansprüche 1 bis 5, dadurch gekennzeichnet, daß der Feuchtigkeitssensor von einem Schalter, beispielsweise dem Raumbeleuchtungsschalter überbrückt wird.

7. Entlüftungsgerät nach einem der Ansprüche 1 bis 6, dadurch gekennzeichnet, daß der Feuchtigkeitssensor (5) im Einlaufkanal liegt.

8. Entlüftungsgerät nach einem der Ansprüche 1 bis 7, dadurch gekennzeichnet, daß als Antriebsmotor ein Einphasen-Wechselstrommotor oder aber ein elektronisch kommutierter Gleichspannungsmotor vorgesehen ist.

9. Entlüftungsgerät nach einem der Ansprüche 1 bis 8, dadurch gekennzeichnet, daß zum Steuern der Motordrehzahl Differenz-Feuchtefühler vorgesehen sind.

Fig.1

Fig.2